# EUROPÄISCHE PATENTSCHRIFT

(11) **EP 2 601 032 B1**
(45) Veröffentlichungstag und Bekanntmachung des Hinweises auf die Patenterteilung: **05.04.2017**
(21) Anmeldenummer: 11754987.3
(22) Anmeldetag: 08.08.2011
(51) Int. Cl.: B29C 45/18, B29C 47/10

(54) **PLASTIFIZIEREINHEIT FÜR EINE SPRITZGIESSMASCHINE, EINEN EXTRUDER ODER DERGLEICHEN**
PLASTICISER UNIT FOR AN INJECTION MOULDING MACHINE, AN EXTRUDER OR THE LIKE
UNITÉ DE PLASTIFICATION POUR MACHINE À MOULER PAR INJECTION, EXTRUDEUSE OU SIMILAIRE

(30) Priorität: 06.08.2010 DE 102010039025
(43) Veröffentlichungstag der Anmeldung: 12.06.2013
(73) Patentinhaber: Sumitomo (SHI) Demag Plastics Machinery GmbH, 90571 Schwaig (DE)
(72) Erfinder: LÜCK, André, 90530 Wendelstein (DE); HEIZINGER, Robert, 84494 Neumarkt - St. Veit (DE)
(74) Vertreter: Rau, Schneck & Hübner Patentanwälte Rechtsanwälte PartGmbB
(86) Internationale Anmeldenummer: PCT/EP2011/003960
(87) Internationale Veröffentlichungsnummer: WO 2012/016715

(56) Entgegenhaltungen:
- DE-A1- 1 554 773
- DE-A1- 1 778 166
- DE-A1- 2 814 462
- JP-A- 3 118 124
- JP-A- 4 250 012
- JP-A- 5 057 750
- US-A- 3 461 498
- US-A1- 2002 167 103
- US-A1- 2009 115 087
- US-B1- 6 182 685

## Beschreibung

Die Erfindung betrifft eine Plastifiziereinheit für eine Spritzgießmaschine, einen Extruder oder dergleichen, mit den im Oberbegriff der nebengeordneten Patentansprüche 1 oder 2 angegebenen Merkmalen. Solche Plastifiziereinheiten weisen unter anderem einen Gehäusezylinder, mindestens eine darin drehbar angetriebene Plastifizierschnecke und eine Flüssigkeitszuführeinrichtung vor dem austrittseitigen Ende des Gehäusezylinders zum Einbringen einer oder mehrerer Flüssigkeiten, insbesondere Farbflüssigkeiten, in ein in der Plastifiziereinheit zu plastifizierendes Kunststoffmaterial auf.

Generell ist eingangs festzuhalten, dass mithilfe der erfindungsgemäßen Flüssigkeitszuführeinrichtung in erster Linie "Farben" in den Schneckenraum des Gehäusezylinders eingebracht werden können. Insoweit ist in der folgenden Beschreibung zur Darstellung der der Erfindung zugrunde liegenden Problematik, des Standes der Technik und der eigentlichen Erfindung der besseren Verständlichkeit halber durchgehend von "Farben" oder "Farbstoffen" mit den entsprechenden zusammengesetzten Komponentenbezeichnungen "Farb..." der Flüssigkeitszuführeinrichtung die Rede. Generell können jedoch jedwede flüssigen oder fluiden Mittel zugeführt werden, die für eine Veränderung von Eigenschaften des aufgeschmolzenen Materials sorgen.

Eine Plastifiziereinheit, bei der die Flüssigkeit eben durch einen Flüssigfarbe gebildet ist, ist beispielsweise aus der US 2004/0197435 A1 bekannt. Diese dient zum farbigen Marmorieren des in der Plastifiziereinheit aufbereiteten Kunststoffmaterials, wobei vor dem austrittseitigen Ende des Gehäusezylinders mehrere axial zueinander versetzte Rückschlagventile in der Zylinderwand vorgesehen sind, die über Farbzuführleitungen mit unterschiedlichen Farbmedien versorgt werden. Zur Zuleitung der Farbe wird aus einem Farbtrichter mittels einer Druckluft-Farbpumpe die Farbe mitgenommen und über verschiedene weitere Steuerventile und Schläuche dem Plastifizierzylinder zugeführt.

Die DE 23 63 503 A1 offenbart ein Verfahren zur Herstellung von Kunststoffteilen unter Anwendung einer an sich bekannten Schneckenpresse zur Erzeugung einer spritz- und/oder blasfähigen Masse, wobei der plastifizierten Masse ein Farbkonzentrat in flüssiger Phase erst unmittelbar vor dem Austritt aus der Pressdüse zugeführt wird.

Die EP 0 623 445 B1 zeigt eine Spritzeinheit an Spritzgießmaschinen zur Herstellung thermoplastischer Kunststoffteile mit einer rotierenden und axial verschiebbar angeordneten Plastifizier- und Einspritzschnecke sowie einer Farbdosiereinrichtung mit mindestens einem Farbbehälter. Die Farbzuleitung erfolgt über eine Einspritzdüse, die in den plastifizierten Massestrom mündet.

Aus der DE 102 23 374 B4 ist eine Vorrichtung zum universellen Einfärben von kontinuierlich unter Druck strömenden, in einem Extruder plastifizierten viskosen Massen bekannt, die eine Dosier- und Mischeinrichtung sowie eine Hochdruckpumpe aufweist. Letztere führt eine Mischfarbe nach dem Extruder in den viskosen Massenstrom mit einem höheren als dem dort vorliegenden Druck zu.

Die DE 10 2006 052 040 A1 offenbart ein Mischsystem zum gezielten Mischen von mindestens zwei unterschiedlichen Färbemitteln mit mindestens einem thermoplastischen Polymerrohstoff zum Einfärben von Kunststoff-Spritzgussteilen mit einem definierten Farbwert zum Einsatz an einer Spritzgießmaschine. Die Farbmittel können dem Polymerrohstoff vor, während oder nach dem Aufschmelzvorgang zugegeben werden.

Die JP 59096932 A schließlich zeigt eine Plastifiziereinrichtung mit einer Haupt-Plastifiziereinheit zum Aufbereiten eines farblosen Thermoplastmaterials sowie einer Neben-Plastifiziereinheit zum Plastifizieren eines farbigen Rohmaterials. In einem Übergangsbereich, der sich an die Ausspritzbereiche beider Einheiten anschließt, werden die plastifizierten Massen zusammengeführt und vermischt.

Im Zusammenhang mit der Einfärbung von thermoplastischen Spritzgussteilen sind schließlich noch weitere grundsätzliche Färbetechniken kurz aufzulisten. So kann eine Farbzugabe mittels sogenannter "Master Batches" erfolgen, wobei in dem Materialtrichter ein entsprechender Anteil farbiger Ausgangsstoffe angegeben wird. Die Farbzugabe kann auch mittels Flüssigfarben durch eine mengengesteuerte Zugabe im Einfüllbereich der Plastifiziereinheit stattfinden. Eine solche Flüssigfarbe kann auch bei kontinuierlichen Prozessen über eine Mischeinheit inline zugegeben werden.

Zwei völlig unterschiedliche Ansatzpunkte bestehen einerseits in der Verarbeitung von schon eingefärbten Materialien, indem vorgefärbte Granulate im Materialtrichter verwendet werden, und andererseits in der Einfärbung von Kunststoffprodukten durch Tauch- oder Farblackierungen, was einen nachgeschalteten Prozess bedeutet.

Eine Vielzahl der vorstehenden Färbetechniken nach dem Stand der Technik zeigt den großen Nachteil, dass beim Umstellen von einer ersten Farbe auf eine zweite Farbe jeweils die gesamte Plastifiziereinheit oder auch eine zum Einsatz kommende Lackiereinheit gereinigt bzw. gespült werden muss. Bei Systemen, wo die Farbzugabe erst kurz vor dem austrittseitigen Ende des Gehäusezylinders stattfindet, ist dieser Nachteil bereits stark gelindert, jedoch beschäftigt sich der entsprechende Stand der Technik explizit nicht mit dem Problem einer möglichst raschen und sauberen Farbwechselstrategie insbesondere unter sehr homogenen Prozessbedingungen wie Druck und/oder Menge.

Ferner ist die Handhabung von offenen Farbsystemen aufgrund der oft sehr intensiven Färbewirkung der beteiligten Farbstoffe ausgesprochen problematisch, was die ungewollte Farb-Verschmutzung der Maschinenumgebung, als auch die Verunreinigung des Farbsystems selbst durch Fremdstoffe, betrifft.

Die gattungsgemäße Druckschrift JP 4 250012 A offenbart eine Plastifiziereinheit für eine Spritzgießmaschine, die neben den bereits ganz am Anfang dieser Beschreibung erwähnten technischen Merkmalen ferner auf weist
- mindestens einen Flüssigkeitsanschluss-Adaptereinsatz, in dem ein Flüssigkeitszuführkanal angeordnet ist,
- mindestens eine in der Zylinderwand angelegte, über eine Zugriffsbohrung in den Schneckenraum mündende Aufnahme für den Flüssigkeitsanschluss-Adaptereinsatz,
- eine auf dem Flüssigkeitsanschluss-Adaptereinsatz montierte Ventilanordnung, mittels derer der Flüssigkeitszuführkanal im Bereich des Adaptereinsatzes verschließbar ist, und
- mindestens eine, vorzugsweise zwei oder mehrere Flüssigkeitsversorgungseinrichtungen, die jeweils eine Flüssigkeitspumpe mit Flüssigkeitsvorratsbehälter aufweisen und an einer jeweiligen Flüssigkeitsanschlussleitung der Ventilanordnung angeschlossen sind, wobei die vorzugsweise durch einen pneumatischen Antrieb betätigbare Ventilanordnung ein Nadelventil aufweist, dessen Ventilsitz vorzugsweise auf Höhe der Zugriffsbohrung in der Zylinderwand angeordnet ist.

Bei derartigen Plastifiziereinheiten besteht grundsätzlich der Bedarf, einen Flüssigkeits- und insbesondere Farbwechsel möglichst gezielt steuern und schnell durchführen zu können, was der vorliegenden Erfindung als Auf gabe zugrunde liegt.

Diese Aufgabe wird durch die im jeweiligen Kennzeichnungsteil der nebengeordneten Patentansprüche 1 und 2 gelöst.

Gemäß einer ersten Alternative der Erfindung ist für einen besonders schnellen Farbwechsel die Ventilanordnung als Zwei-Wege-Ventil ausgelegt, über die zwei Farbanschlussleitungen wechselweise mit dem Farbzufuhrkanal verbindbar sind. In diesem Zusammenhang ist die Auslegung der Ventilanordnung in Form eines Nadelventils besonders geschickt, da dann die Ventilnadel einen hohlen, zum Schneckenraum hin offenen Nadelschaft aufweisen kann. Dieser kann mit mindestens einer Schaftöffnung versehen sein, die mit einer der Farbanschlussleitungen verbindbar ist. Gleichzeitig wird die andere Farbanschlussleitung dann verschlossen. Insgesamt ist der Wechselmechanismus optimal nahe am Schneckenraum der Plastifiziereinheit positioniert, sodass bei einem Farbwechsel nur minimale Farbreste im Farbzufuhrkanal ausgetrieben werden müssen. Entsprechend gering ist auch der Spülbedarf.

Die zweite Alternative sieht eine Mehrfach-Ventileinheit vor, die die den Flüssigkeitszuführkanal zum Schneckenraum verschließende Haupt-Ventilanordnung sowie mehrfache, vorzugsweise fünffache Neben-Ventileinheiten in einzelnen, in den Flüssigkeitszuführkanal mündenden Flüssigkeitsanschlussleitungen umfasst. Die Haupt-Ventilanordnung im Flüssigkeitszuführkanal wirkt damit mit den einzelnen Neben-Ventileinheiten zusammen, die vorzugsweise einzeln durch Antriebe unabhängig voneinander ansteuerbar sind. Damit können die einzelnen Farben unabhängig voneinander durch entsprechendes Steuern der einzelnen Neben-Ventileinheiten gezielt in die Kunststoffschmelze der Plastifiziereinheit eingebracht werden. Damit können auch ein oder mehrere Farbanschlussleitungen unterschiedlich lange geöffnet und geschlossen werden. Damit sind sehr variable Farbmischungen erzielbar und die gesamte Farbzugabe auf einfache Weise sehr genau justierbar. Die Neben-Ventileinheiten vorzugsweise in Form von Nadelventilen können in ihrem Hub justiert und gegebenenfalls auch über Sensoren positionsüberwacht werden.

Die generellen Vorteile der Erfindung und bevorzugte Ausführungsformen werden - wie oben bereits angesprochen - nun anhand einer Farbzuführeinrichtung erläutert. So kann aufgrund der erfindungsgemäßen Ausgestaltung der Farbzuführung über den Adaptereinsatz einer damit gekoppelten Ventilanordnung in einem laufenden Prozess zwischen zwei oder mehr Farben ohne Stillstand schneller gewechselt werden. Versuche haben gezeigt, dass beispielsweise bei Anwendung an einer Spritzgießmaschine mit einer Zahl von 15 bis 30 Schüssen eine komplette Farbumstellung im laufenden Prozess beim gespritzten Endprodukt stattfinden kann.

Mithilfe der an den Farbzuführkanal im Bereich des Adaptereinsatzes über die Ventilanordnung anschließbaren Farbversorgungseinrichtung für jeweils eine Farbe ist das Farbsystem schnell, einfach und ohne direkten Farbkontakt auswechselbar, um weitere oder andere Farben anbinden zu können. Auch ist ein längerfristiger Betrieb der Plastifiziereinheit bei ausgeschalteter Farbzuführung möglich.

Mithilfe des Adaptereinsatzes erfolgt ferner eine indirekte Vorheizung der eingespritzten Farbe durch Konvektion vom Gehäusezylinder her, was sich positiv auf den Einmischprozess der Farbe in das aufgeschmolzene Kunststoffmaterial auswirken kann.

Das Konzept des Adaptereinsatzes, der über eine enge Zugriffsbohrung in den Schneckenraum mündet, verhindert eine signifikante Schwächung des unter Druck stehenden Gehäusezylinders, wodurch die Farbanbindung am austrittseitigen Ende des Gehäusezylinders mechanisch gut beherrschbar bleibt.

Vorzugsweise ist die Position der Farbanbindung hinter dem Verschlusssystem der in dem Gehäusezylinder drehbaren Plastifizierschnecke angeordnet, so dass die notwendigen Drücke für das Einbringen von Farbpigmenten auf einem geringen Maß und sehr homogen gehalten werden können.

Um genaue Kenntnisse über die vorherrschenden Drücke an der Farbeinbringstelle zu erhalten, kann direkt in den Adaptereinsatz oder peripher versetzt, vorzugsweise um 45 oder 135 Grad, aber auch an jeder anderen Peripherposition oder Position in der näheren Umgebung des Adaptereinsatzes ein zusätzlicher Schmelze- und/oder Farbdrucksensor in das Zylindergehäuse eingebracht und zur Farbregelung herangezogen werden. Idealerweise liegt der Messbereich von entsprechenden Drucksensoren in der oder um die Farbeinbringstelle im Messebereich von 1-500 bar.

Ferner wird ein direkter Kontakt des Maschineneinrichters mit Flüssigfarbe und Reinigungsmitteln vermieden, da die Farbversorgungseinrichtung als in sich abgeschlossenes Teilsystem ausgelegt ist. Das Gesamtsystem kann dabei innerhalb kürzester Zeit auch bis in den Zylinder und in die Heisskanäle im Werkzeug einer Spritzgießmaschine hinein gereinigt werden.

Insgesamt kann die Farbzuführeinrichtung aufgrund der mechanischen Auslegung so geschickt konzipiert werden, dass im Wesentlichen durchwegs Einkanalwege ohne nennenswerte Toträume in den Farbzuführungsleitungen vorliegen, sodass keine Hinterschneidungsbereiche, Kanten und Ecken vorhanden sind, in denen sich Farbrückstände sammeln könnten. Auch die direkte Farbeinbringstelle zum Polymergemisch kann vorzugsweise so konzipiert werden, dass Toträume beispielsweise durch pinförmige Verlängerungen der Verschlussnadeln bis zur Gehäusezylinderinnenwand vermieden werden. Dies begünstigt weiter einen schnellen und rückstandsfreien Farbwechsel.

Gemäß einer bevorzugten Ausführungsform der Erfindung kann die Farbzuführeinrichtung mit einer Farbanschlussleitung in der Ventilanordnung vorgesehen sein, woran mehrere Farbversorgungseinrichtungen über eine Verzweigung angeschlossen sind. Der Wechsel oder das Mischen zwischen mehreren Farben und ggf. auch der Anschluss von Spülmittelversorgungen erfolgt dann über den jeweiligen Pumpenbetrieb der Farbversorgungseinrichtung. Die Ventilanordnung dient dann im Wesentlichen zum Öffnen und Schließen des Farbzuführkanals in den Gehäusezylinder.

Statt oder zusätzlich zu einer Farbversorgungseinrichtung kann das System auch mit einer oder gegebenenfalls mehreren Spülmediumversorgungseinrichtungen versehen sein, die analog der Farbversorgungseinrichtungen mit einer Spülpumpe und einem Spülmediumvorratsbehälter ausgestattet und an die Farbanschlussleitung(en) anschließbar sind.

Als erfindungsgemäße Ausführung der Ventilanordnung ist ein Nadelventil vorgesehen, da dieses mit geringen Toträumen und Leitungsquerschnitten arbeitet und die Voraussetzung bietet, dass der Ventilsitz optimal nahe an den Schneckenraum herangeführt werden kann. Dieser ist gemäß einer weiteren bevorzugten Ausführungsform auch auf Höhe der Zugriffsbohrung in der Zylinderwand angeordnet.

Der Farbzuführkanal kann konzentrisch um die Ventilnadel des Nadelventils angeordnet sein, sodass im Sinne möglichst gerader Zuführwege und enger Leitungsquerschnitte der Farbzuführkanal als Ringkanal ausgebildet ist.

Vorteilhafterweise ist die Ventilanordnung über einen steuerungstechnisch einfach beherrschbaren pneumatischen Antrieb betätigbar, denkbar sind aber alle dem Stand der Technik nach bekannten Antriebe, wie hydraulisch oder elektrisch angetriebene Ventilanordnung. Die zeitliche Ansteuerung der Ventilanordnung ist an die Prozesseinstellungen flexibel anpassbar. Idealerweise kann über einen Drucksensor zwischen Nadelventil und Farb-/Spülpumpe der Farbstrom geregelt werden. Ebenso kann ein zeitversetztes

Öffnen oder Schließen der Ventilanordnung ermöglicht werden. Schließlich kann das Nadelverschlusssystem auch zum Vorkomprimieren der Farbe oder gegenüber zu hohem Druck im Gehäusezylinder als Sicherheitsverschluss genutzt werden. Vorteilhafterweise können die Drucksensoren dabei als Grenzwertgeber genutzt werden.

Eine zusätzliche Ausstattung des Nadelverschlusssystems mit Signalgebern für die Erreichung der Endpositionen kann sich auf die Sicherheit des Gesamtsystems positiv auswirken. Beispielsweise kann bei Druckabfall in der Luftzuführung oder bei mechanischen Problemen des Nadelsystems eine Stilllegung der Anlage erfolgen.

Durch die weiter vorgesehene Kombination des pneumatischen Antriebs mit dem Adaptereinsatz über einen Halter ist eine modulartige Montage gewährleistet, was herstellungs- und wartungstechnische Vorteile mit sich bringt. Der modulartige Aufbau setzt sich in einer Grundhalterung fort, welche eine stabile Befestigung des Gesamtsystems Farbzuführung zum Gesamtsystem Plastifiziereinheit bewerkstelligt.

Die geometrische Anordnung der Flüssigkeitsanschlussleitungen ist so gewählt, dass diese in einer zur Ventilachse der Hauptventilanordnung senkrechten Ebene in den Flüssigkeitszuführkanal münden, denkbar sind aber auch hier Winkelabweichungen zur Senkrechten. Sie können dabei über einen Halbkreis in Plastifizierrichtung nach hinten ausgerichtet und vorzugsweise in regelmäßigen Winkelabständen verteilt einmünden, sodass eine homogene Farbzugabe und intensive Vermischung bei gleichzeitiger Aktivierung mehrerer Farbzugaben realisierbar ist. Durch diese Anordnung wird ferner eine Kollision des Gesamtfarbsystems auch bei tief eintauchenden Plastifizierzylindern in die Durchgangsbohrung(en) der Maschinenaufspannplatte vermieden wird.

Gemäß einer weiteren bevorzugten Ausführungsform ist die Ventilanordnung in einer Wärmedämmeinlage im Adaptereinsatz oder auf einer Isolierplatte auf dem Adaptereinsatz angeordnet. Damit kann die Ventilanordnung und damit im Wesentlichen das gesamte Farbzufuhrsystem thermisch vom Plastifizierzylinder abgekoppelt werden, sofern dies beispielsweise bei temperaturempfindlichen Farben oder mechanischen bzw. elektrischen Bauteilen, wie pneumatischen Antrieben oder Elektromotoren notwendig sein sollte. Bei äußerst temperatursensiblen Farben kann das Farbzuführsystem gegebenenfalls mit einem Medium temperiert werden, beispielsweise über Flüssigkeitsleitungen, um überschüssige Wärmemenge gezielt und dauerhaft abzuführen.

Durch die gegenüber dem Gehäusezylinder weichere Auslegung des Stahl-Werkstoffs des Adaptereinsatzes wird bei einem mechanischen Schaden daran und bei einem entsprechend notwendigen, mehr oder weniger gewaltsamen Entfernen des Adaptereinsatzes verhindert, dass der weitaus komplexere und damit kostenaufwändigere Plastifizierzylinder beschädigt wird.

Mithilfe des Adaptereinsatzes kann ferner eine optimale Abdichtung für die Farbzuführeinrichtung erzielt werden. So sind vorzugsweise konusförmige Dichtflächen zwischen Adaptereinsatz und Aufnahme des Gehäusezylinders vorgesehen, deren Dichtwirkung noch durch leicht unterschiedliche Konuswinkel der Dichtflächen verbessert werden kann. In letzterem Falle wird nämlich im Wesentlichen ein Linien-Dichtkontakt zwischen weicherem Adaptereinsatz und härterem Gehäusezylinder erzielt, was im Hinblick auf den im Schneckenraum herrschenden Druck von besonderem Vorteil ist.

Zusätzlich können nach außen laufende Entlastungsbohrungen am Gehäusezylinder direkt hinter der Dichtfläche bei Leckage Druckanstieg und somit Beschädigungen des Adapters oder des Gehäusezylinders verhindern. Der Adaptereinsatz kann dabei einen vorzugsweise über die Heizbänder der Plastifiziereinheit radial hinaus stehenden Außensechskant zur rationellen und mit Standardwerkzeug möglichen Montage und Demontage auf weisen. Auch der Einsatz eines werkzeuglosen Wechselsystems ist denkbar. Dies alles bringt wiederum herstellungs- und wartungstechnische Vorteile mit sich.

Zur Erhöhung der Anwendungsflexibilität der erfindungsgemäßen Einheit kann schließlich der Adaptereinsatz als Blindstopfen ausgeführt sein, sodass die Zugriffsbohrung für das Farbzuführsystem schlicht verschlossen ist und der Plastifizierzylinder wie eine normale Plastifiziereinheit ohne Farbzumischung arbeitet.

Weitere Merkmale, Einzelheiten und Vorteile ergeben sich aus der nachfolgenden Beschreibung von Ausführungsbeispielen anhand der beigefügten Zeichnungen. Es zeigen:
- Fig. 1: eine schematische Gesamtansicht einer Plastifiziereinheit mit Farbzuführeinrichtung,
- Fig. 2 und 3: Querschnitte eines Plastifizierzylinders im Bereich eines Adaptereinsatzes mit Ventilanordnung in einer ersten, nicht erfindungsgemäßen Ausführungsform,
- Fig. 4 und 5: ausschnittsweise Längsschnitte eines Plastifizierzylinders im Bereich eines Adaptereinsatzes mit Ventilanordnung in einer zweiten, erfindungsgemäßen Ausführungsform,
- Fig. 6: eine schematische Gesamtansicht einer Plastifiziereinheit in einer weiteren erfindungsgemäßen Ausführungsform mit 5-fach-Farbzuführeinrichtung,
- Fig. 7: eine Draufsicht auf die Plastifiziereinheit gem. Fig. 6, und
- Fig. 8: einen Querschnitt des Plastifizierzylinders entlang der Schnittlinie VIII - VIII nach Fig. 7.

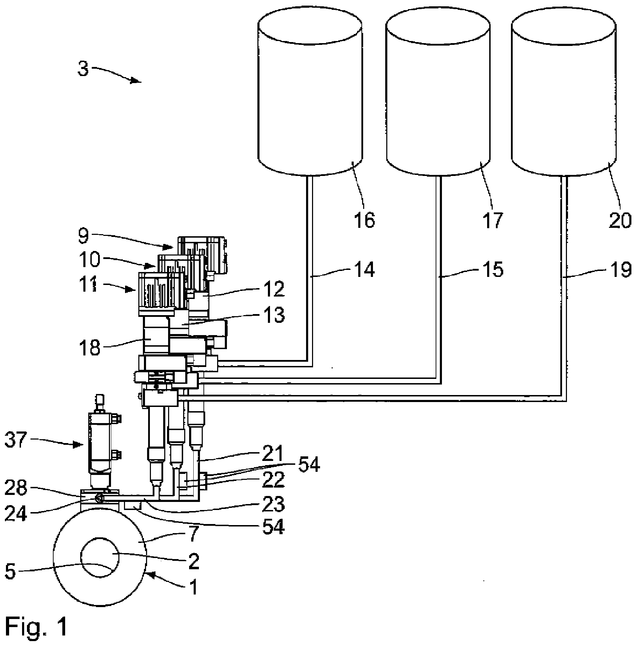

Wie aus Fig. 1 hervorgeht, weist die gezeigte Plastifiziereinheit für eine Spritzgießmaschine einen Gehäusezylinder 1 auf, in dem eine Plastifizierschnecke 2 drehbar und für den Einspritzhub in Axialrichtung verschiebbar angetrieben ist. Nähere Ausführungen zur Arbeitsweise und zum Aufbau einer solchen Plastifiziereinheit erübrigen sich, weil sie in diesem Zusammenhang üblich ausgebildet ist.

Da die gezeigte Plastifiziereinheit Teil einer Spritzgießmaschine zur Herstellung verschieden einfärbbarer Spritzgussartikel ist, weist diese Plastifiziereinheit eine Farbzuführeinrichtung 3 auf, mittels derer eine Flüssigfarbe vor dem austrittseitigen Ende 4 des Gehäusezylinders 1 in das im Schneckenraum 5 des Gehäusezylinders 1 zu plastifizierende Kunststoffmaterial einbringbar ist.

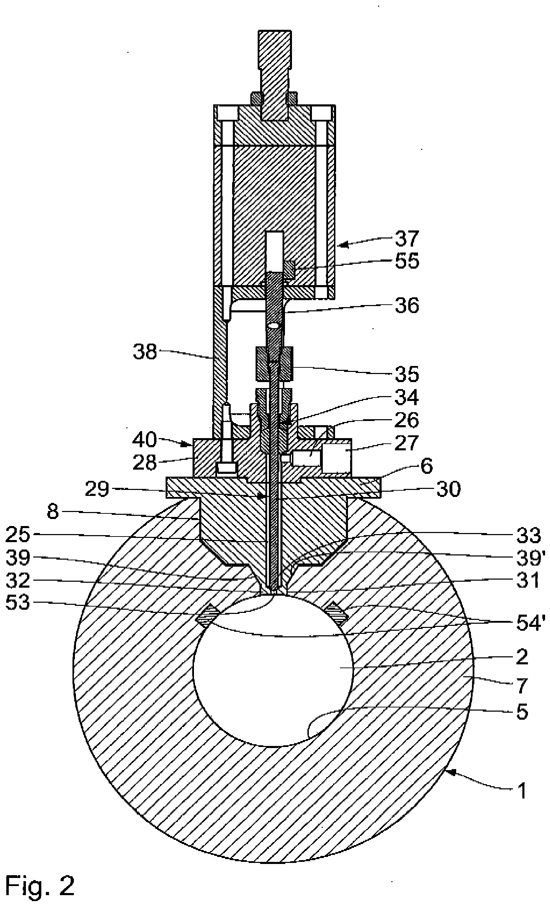

Wie aus den Fig. 2 bis 5 deutlich und im Folgenden noch näher erläutert wird, dient zur Anbindung der Farbzuführeinrichtung 3 an den Gehäusezylinder 1 ein Farbanschluss-Adaptereinsatz 6, der in einer in der Zylinderwand 7 des Gehäusezylinders 1 angelegten Aufnahme 8 eingeschraubt oder eingepasst ist. Das Schraubgewinde ist dabei in den Figuren der Übersichtlichkeit halber weggelassen.

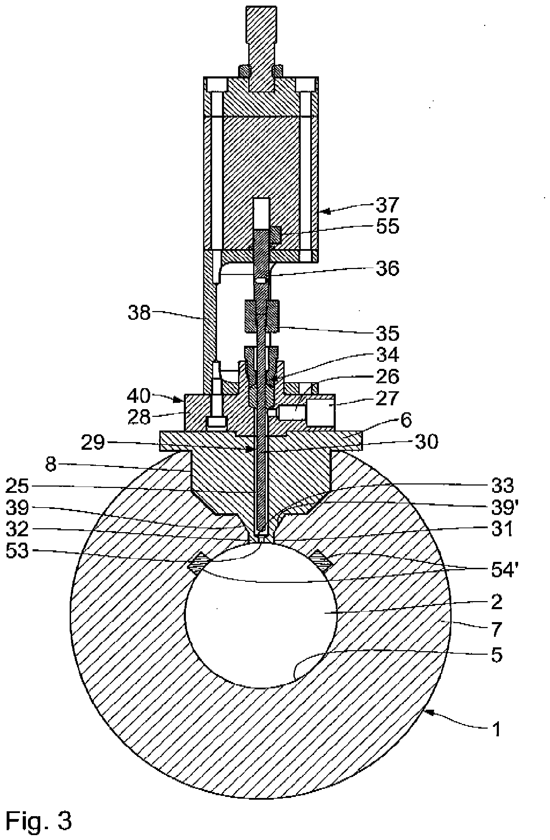

Bevor auf den Adaptereinsatz 6 näher eingegangen wird, soll anhand von Fig. 1 die Bereitstellung und Druckbeaufschlagung der einzelnen Flüssigfarben und eines Spülmittels beschrieben werden. So sind zwei Farbversorgungseinrichtungen 9, 10 für zwei unterschiedliche Farben sowie eine Spülmediumversorgungseinrichtung 11 vorgesehen. Die beiden Farbversorgungseinrichtungen 9, 10 weisen jeweils eine Farbpumpe 12, 13 auf, die möglichst über starre Verbindungsleitungen 14, 15 mit Farbvorratsbehältern 16, 17 verbunden ist. Gleichermaßen ist in der Spülmediumversorgungseinrichtung eine Spülpumpe 18 vorgesehen, die über eine Leitung 19 mit einem Spülmediumvorratsbehälter 20 verbunden ist. Mithilfe der Pumpen 12, 13, 18 sind die jeweiligen Medien unter hohen Druck setzbar, da diese gegen den hohen Schmelzedruck im Schneckenraum 5 des Gehäusezylinders 1 eingebracht werden müssen. Entsprechend sind die Pumpen 12, 13, 18 über starre Leitungen 21, 22, 23 und eine Verzweigung 24 an einen Medienkanal, im Folgenden mit "Farbzuführkanal" 25 bezeichnet, im Adaptereinsatz 6 angeschlossen. Der Farbzuführkanal 25 ist bezogen auf die Längsachse des Gehäusezylinders 1 radial, bezogen auf den Adaptereinsatz 6 koaxial zu dessen Einschraubachse in der Zylinderwand 7 angelegt. Zum Anschließen der Verzweigung 24 an den Adaptereinsatz 6 dient im Übrigen eine Farbanschlussleitung 26, die einen seitlich mündenden Anschlussstutzen 27 für die Verzweigung 24 aufweist. Die Farbanschlussleitung 26 ist in einer Isolierplatte 28 auf dem Adaptereinsatz 6 angelegt, an der eine als Ganzes mit 29 bezeichnete Ventilanordnung montiert ist. Bei letzterer handelt es sich um eine Nadelventilanordnung, deren Ventilnadel 30 koaxial im Farbzuführkanal 25 verschiebbar gerührt ist. Der Ventilsitz 33 ist - wie aus Fig. 2 und 3 deutlich wird - bei dieser Einkanal-Lösung auf Höhe einer Zugriffsbohrung 31 in der Zylinderwand 7, die nur wenige Millimeter Durchmesser aufweist. In dieser Zugriffsbohrung 31 sitzt das düsenförmige Ende 32 des Adaptereinsatzes 6, das mit seiner dem Schneckenraum 5 zugewandten Stirnfläche um wenige Zehntel Millimeter gegenüber der Innenseite der Zylinderwand 7 zurückversetzt ist. Der Durchmesser der Innenbohrung 53 zum Schneckenraum 5 des düsenförmigen Endes 32 kann je nach Viskosität des Farbmediums zwischen wenigen Zehntel und einigen Millimetern variieren. Der Ventilsitz 33 kooperiert mit dem Ende der Ventilnadel 30, die in einer Führung 34 in der Isolierplatte 28 längsaxial verschiebbar ist. Dazu ist die Ventilnadel 30 über eine Koppelhülse 35 mit der Kolbenstange 36 eines pneumatischen Antriebs 37 verbunden, der über einen Halter 38 und die Isolierplatte 28 auf dem Adaptereinsatz 6 montiert ist. Durch eine entsprechende Ansteuerung des pneumatischen Antriebs 37 ist die Ventilnadel 30 aus der in Fig. 2 gezeigten Schließstellung, in der das untere Ende der Ventilnadel 30 im Ventilsitz 33 sitzt, und der Offenstellung gemäß Fig. 3 hin- und her bewegbar.

Bezüglich der mechanischen Eigenschaften und Befestigung des Adaptereinsatzes 6 in der Aufnahme 8 der Zylinderwand 7 ist festzuhalten, dass der Adaptereinsatz 6 grundsätzlich aus einem weicheren Stahl-Werkstoff besteht, als die Zylinderwand 7. Die Vorteile hiervon sind oben bereits angesprochen. Das düsenförmige Ende 32 wird bei der Ausführungsform, gemäß Fig. 2 und 3 von konusförmigen Dichtflächen 39 gefolgt, die mit entsprechenden Dichtflächen 39' im Anschluss an die Zugriffsbohrung 31 der Zylinderwand 7 kooperieren. Wie in den Zeichnungen nicht verdeutlicht werden kann, sind die Konuswinkel der Dichtflächen 39, 39' von Adaptereinsatz 6 und Zylinderwand 7 leicht unterschiedlich, sodass sich in unmittelbarer Nähe zum Schneckenraum 5 besonders wirksame Linien-Dichtkontakte ergeben. Zur exakten rotatorischen Positionierung der Farbzuführeinrichtung 3 senkrecht zur Spritzachse kann der Adaptereinsatz 6 vorzugsweise über Passstifte ebenfalls senkrecht zur Spritzachse positioniert werden. Diese Elemente sind der Übersicht halber ebenfalls weggelassen.

Die Isolierplatte 28 verlängert den Adaptereinsatz 6 im Übrigen radial nach außen, sodass diese Konstruktion über die nicht näher dargestellten Heizbänder der Plastifiziereinrichtung radial hinaus stehen. Durch eine Außensechskant-Form 40 der Isolierplatte 28 kann dann die gesamte Baugruppe aus Adaptereinsatz 6, Isolierplatte 28, Halter 38 und pneumatischem Antrieb 37 rasch mit einfachem Werkzeug abgenommen werden.

Sofern die im Schneckenraum 5 aufzubereitenden Kunststoffmaterialien mit einer ersten Farbe etwa aus der Farbversorgungseinrichtung 9 eingefärbt werden soll, ist die Farbpumpe 12 aktiviert und die Ventilanordnung 29 geöffnet (Fig. 3). Die Farbe wird in den Schneckenraum eindosiert und homogen im Kunststoffmaterial verteilt. Bei einem Farbwechsel wird zuerst die Spülmediumsversorgungseinrichtung 11 aktiviert, sodass die in der Verzweigung 24, der Farbanschlussleitung 26 und im Farbzuführkanal 25 befindliche Farbe ausgespült und zusammen mit dem Spülmedium über das Kunststoffmaterial abtransportiert wird. Nach einer entsprechenden Anzahl von Schüssen der Plastifiziereinheit wird dann die zweite Farbversorgungseinrichtung 10 mit ihrer Farbpumpe 13 aktiviert, sodass über die nun gereinigten Leitungskomponenten bestehend aus Verzweigung 24, Farbanschlussleitung 26 und Farbzuführkanal 25 die zweite Farbe homogen in den Schneckenraum 5 eindosiert werden kann.

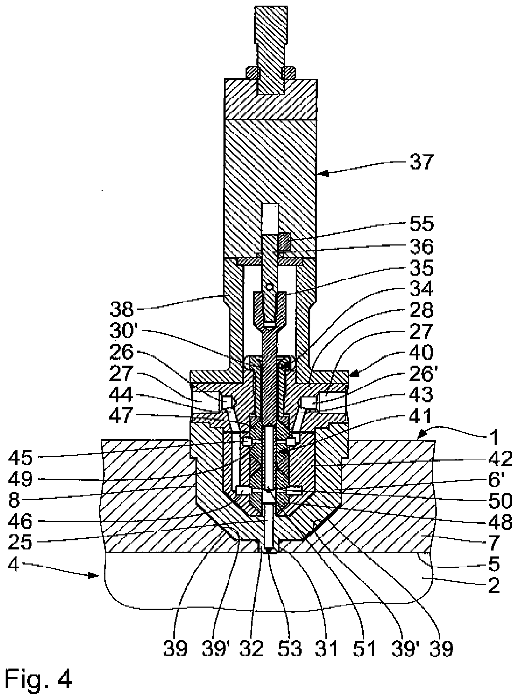

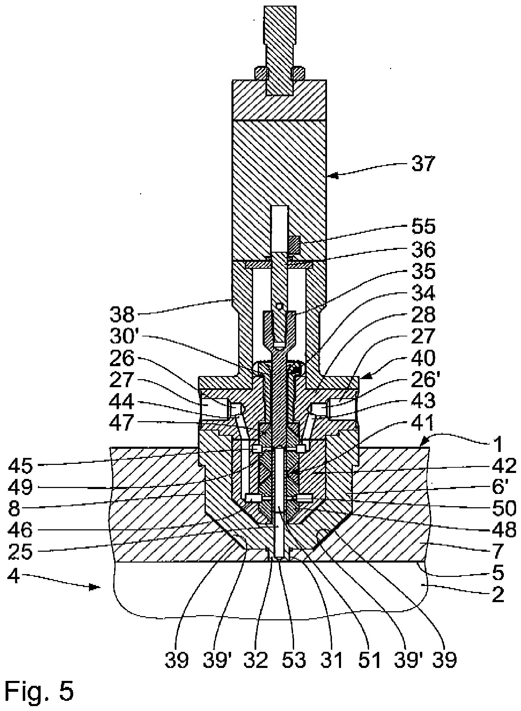

Die in Fig. 4 und 5 gezeigte Ausführungsform unterscheidet sich von der gemäß Fig. 2 und 3 im Wesentlichen darin, dass die Ventilanordnung eine Zwei-Wege-Ventilanordnung 41 ist, bei der in der Isolierplatte 28 radial gegenüber liegend zwei Farbanschlussleitungen 26, 26' zum Anschluss von zwei Farbversorgungssystemen 9, 10 ohne Verzweigung vorgesehen sind. Von den Farbanschlussleitungen 26, 26' führen in der Isolierplatte 28 und in einer konzentrisch im Adaptereinsatz 6' vorgesehenen Wärmedämmeinlage 42 angelegte Fallleitungen 43,44 zu Ringkanälen 45, 46, die jeweils an unterschiedlichen Axialpositionen um den zentralen Farbzufuhrkanal 25 angeordnet sind. Letzterer ist in hülsenförmigen Einsätzen 47, 48 angelegt, die jeweils von den Ringkanälen 45, 46 ausgehende Einspritzdüsen 49, 50 zum Farbzuführkanals 25 aufweisen. Diese Einspritzdüsen 49, 50 sind wiederum an axial beabstandeten Positionen vorgesehen.

Die Ventilnadel 30' der Zwei-Wege-Ventilanordnung 41 ist in diesem Falle mit einem hohlen Schaft 51 versehen, dessen Länge so ausgelegt ist, dass bei maximal zurückgezogener Stellung der Ventilnadel 30' deren Frontende hinter die Einspritzdüse 50 des unteren Ringkanals 46 zurückfährt und somit diese Einspritzdüse 50 freigibt. Damit kann die Farbe aus der Farbversorgungseinrichtung 10 über die Farbanschlussleitung 26' und den Farbzuführkanal 25 in den Schneckenraum 5 des Gehäusezylinders 1 eindosiert werden.

Für einen Farbwechsel wird die Zwei-Wege-Ventilanordnung 41 mittels ihres pneumatischen Antriebs 37 aktiviert und die Ventilnadel 30' in die in Fig. 5 gezeigte, maximal vorgeschobene Position verschoben. Damit verschließt der hohle Schaft 51 der Ventilnadel 30' die Einspritzdüsen 50. Die zweiten Einspritzdüsen 49 werden über Düsenöffnungen 52 im Schaft 51 freigegeben, sodass daraus Farbe in den hohlen Schaft 51 und damit den Farbzuführkanal 25 eintreten kann. Dementsprechend wird nun die zweite Farbe aus der Farbversorgungseinrichtung 9 in den Schneckenraum 5 eindosiert.

Erkennbar muss bei einem Farbwechsel lediglich der äußerst kleinvolumige Raum innerhalb des hohlen Schafts 51 und des Farbzuführkanals 25 von der nicht mehr gewünschten Farbe durch Austreiben mittels der gewünschten Farbe befreit werden. Dies ist - wie Versuche ergeben haben - mit einer relativ geringen Anzahl von Schüssen der Plastifiziereinheit möglich. Die zeitliche Ansteuerung der Ventilanordnung 29 ist - wie eingangs bereits erwähnt - an die Prozesseinstellungen flexibel anpassbar. Idealerweise kann über einen Drucksensor 54 (Fig. 1) zwischen dem Nadelventil der Ventilanordnung und der Farb-/Spülpumpe 12, 13 der Farbstrom geregelt werden. Ebenso kann ein zeitversetztes Öffnen oder Schließen der Ventilanordnung 29 ermöglicht werden. Schließlich kann das Nadelverschlusssystem auch zum Vorkomprimieren der Farbe oder gegenüber zu hohem Druck im Gehäusezylinder 1 als Sicherheitsverschluss genutzt werden. Vorteilhafterweise kann der Drucksensor 54 dabei als Grenzwertgeber genutzt werden.

Zur weiteren Druckerfassung im Polymermaterial sind im Gehäusezylinder 1 in der Axialposition der Zugriffsbohrung 31 auf einer Peripherposition von etwa 45° und/oder 135° weitere Drucksensoren 54' eingebaut (Fig. 2 und 3).

Eine zusätzliche Ausstattung der Ventilanordnung 29 oder ihres Antriebes 37 mit Signalgebern 55 (Fig. 2 bis 5) für die Erreichung der Endpositionen kann sich auf die Sicherheit des Gesamtsystems positiv auswirken. Beispielsweise kann bei Druckabfall in der Luftzuführung oder bei mechanischen Problemen des Nadelsystems eine Stilllegung der Anlage erfolgen.

Schließlich kann der Adaptereinsatz (6, 6') auch als Blindstopfen zum einfachen Verschluss der Zugriffsbohrung (31) ausgeführt sein.

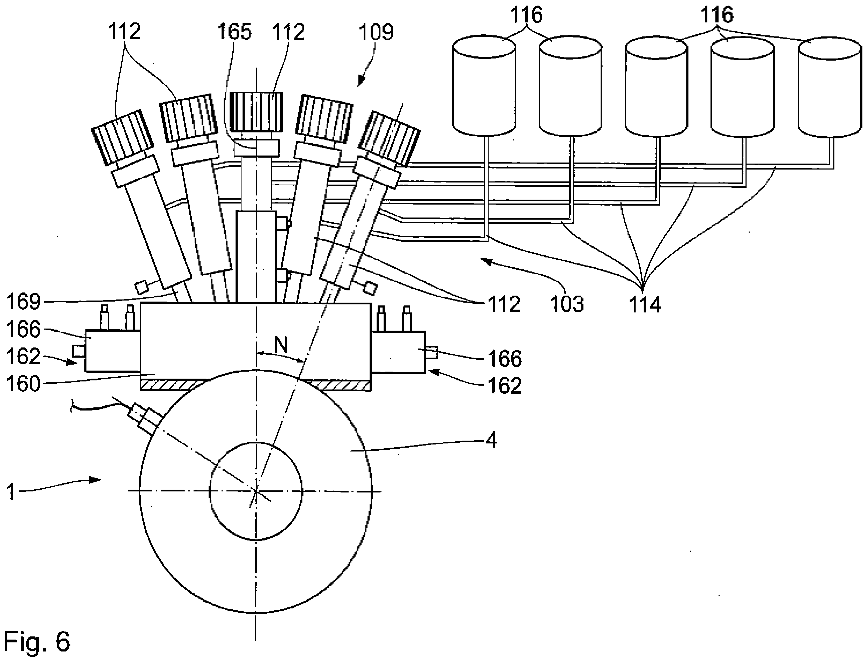

In den Fig. 6 bis 8 ist eine weitere alternative Ausführungsform einer erfindungsgemäßen Plastifiziereinheit dargestellt, die im Folgenden - teilweise unter Bezugnahme auf die Ausführungen zu den Fig. 1 bis 5 - erläutert wird. So weist diese Plastifiziereinheit wiederum einen Gehäusezylinder 1 auf, in dem eine hier nicht näher dargestellte Plastifizierschnecke zum Aufschmelzen des darin befindlichen Kunststoffmaterials drehbar angetrieben gelagert ist. Über eine Düse am austrittsseitigen Ende 4 des Gehäusezylinders 1 wird die im Schneckenraum 5 aufbereitete Kunststoffmasse wie üblich in ein entsprechendes Spritzgusswerkzeug durch den Spritzhub der Plastifizierschnecke eingespritzt.

Die Plastifiziereinheit weist eine 5-fach-Farbzuführeinrichtung 103 auf, mittels der eine oder mehrere, in Mischung gehende Flüssigfarben vor dem austrittsseitigen Ende 4 des Gehäusezylinders 1 in das im Schneckenraum 5 des Gehäusezylinders 1 zu plastifizierende Kunststoffmaterial einbringbar sind.

Analog den Ausführungsformen gem. Fig. 1 bis 5 weist diese Plastifiziereinheit wiederum einen Adaptereinsatz 106 zum Anschluss der Farbzuführeinrichtung 103 auf, der in der Aufnahme 8 in der Zylinderwand 7 des Gehäusezylinders 1 eingesetzt ist. Die Ventilanordnung 129 der Farbzuführeinrichtung 103 ist als Nadelventilanordnung ausgeführt, deren Ventilnadel 130 analog dem Ausführungsbeispiel gem. Fig. 2 und 3 in einem Ventilsitz 133 im düsenförmigen Ende 132 endet. Dieser Bereich der Ventilanordnung 129 befindet sich wiederum analog Fig. 2 und 3 in der Zugriffsbohrung 31 in der Zylinderwand 7 des Gehäusezylinders 1.

Der Adaptereinsatz 106 wird auf seiner Oberseite durch einen als ganzes mit 160 bezeichneten Lagerblock ergänzt, der über eine Isolierplatte 128 auf dem Adaptereinsatz 106 befestigt ist. Dieser Lageblock 160 trägt den pneumatischen Antrieb 137, der die den Farbzuführkanal 125 verschließende Ventilnadel 130 betätigt. Bei der Ausführungsform gem. den Fig. 6 bis 8 stellt die Ventilanordnung 129 das Hauptverschlussorgan für den radial über den Adaptereinsatz 106 in den Schneckenraum 5 mündenden Farbzuführkanal 125 dar. Die Anbindung der Ventilnadel 130 an die Kolbenstange 136 des pneumatischen Antriebs 137 kann beispielsweise wie anhand der Ausführungsform gem. Fig. 2 und 3 erörtert ausgeführt sein und muss daher nicht nochmals beschrieben werden.

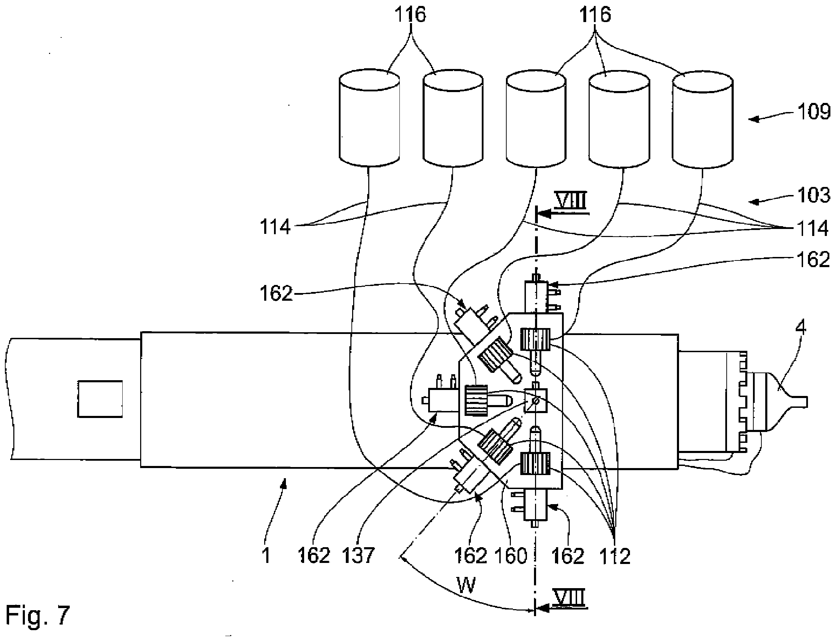

Wie insbesondere anhand von Fig. 6 und 7 deutlich wird, ist die Farbzuführeinrichtung 103 für fünf verschiedene Farben oder auch vier Farben und eine Spüllösung ausgelegt. Dazu weist sie fünf Farbversorgungseinrichtungen 109 auf, die jeweils einen Farbvorratsbehälter 116 und eine Farbpumpe 112 umfassen. Letztere sind auf dem Lagerblock 160 in entsprechende Aufnahmebohrungen 161 angeflanscht und spritzen bei einer Aktivierung die über die Verbindungsleitungen 114 aus den jeweiligen Behältern 116 herangeführte Farbe in eine jeder Farbpumpe 112 zugeordnete Neben-Ventileinheit 162 ein. Die Farbpumpen 112 sind mit ihrer Längsachse in einem Winkel N gegenüber der zentralen Ventilachse 165 geneigt montiert.

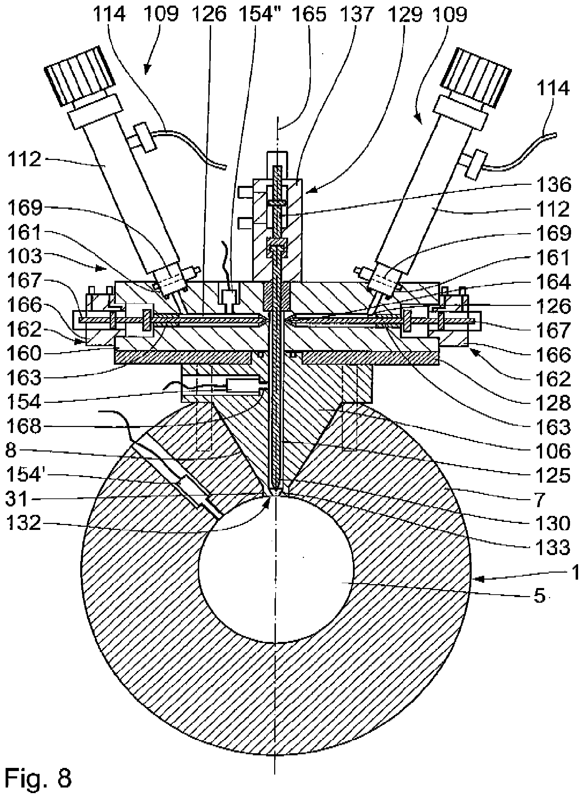

Wie insbesondere aus Fig. 8 deutlich wird, ist jede Neben-Ventileinheit 162 wieder als Nadelventil mit einer Ventilnadel 163 ausgeführt, deren Ventilsitz 164 mit der entsprechenden Ventildüse unmittelbar in den Farbzuführkanal 125 der Haupt-Ventilanordnung 129 mündet. Die Ventilnadeln 163 verlaufen in den Farbanschlussleitungen 126, die in einer zur Ventilachse 165 der Haupt-Ventilanordnung 129 senkrechten Ebene liegen. Wie aus Fig. 7 deutlich wird, sind die Farbanschlussleitungen 126 und entsprechend die Neben-Ventileinheiten 162 über einen vom austrittsseitigen Ende 4 des Gehäusezylinders 1 abgewandten Halbkreis mit regelmäßigen Winkelabständen W von 45° angeordnet (siehe Fig. 7). Jede Neben-Ventileinheit 162 ist dabei durch einen eigenen pneumatischen Antrieb 166 angesteuert, der jeweils an der Außenseite des Lagerblocks 160 befestigt ist. Die Anbindung der Ventilnadeln 163 der Neben-Ventileinheiten 162 an die jeweiligen Kolbenstangen 167 der pneumatischen Antriebe 166 kann wieder analog dem Ausführungsbeispiel gem. Fig. 2 und 3 ausgeführt sein.

Wie aus Fig. 8 deutlich wird, sind bei dieser Ausführungsform der Farbzuführeinrichtung 103 analog den anderen Ausführungsformen Drucksensoren 154, 154' und 154" vorgesehen, von denen der eine Drucksensor 154 über eine entsprechende Bohrung 168 den Druck im Farbzuführkanal 125 erfasst. Der zweite Drucksensor 154' sitzt seitlich in der Zylinderwand 7 des Gehäusezylinders 1. Seine Position ist gegenüber dem Farbzuführkanal 125 um 45° versetzt in der gleichen Längsachsialposition bezogen auf den Gehäusezylinder 1 wie der Farbzuführkanal 125. Neben den Drucksensoren 154, 154' können weitere Drucksensoren an den jeweiligen einzelnen Neben-Ventileinheiten angeordnet werden, wie es in Fig. 8 anhand des Drucksensors 154" dargestellt ist.

Zusammenfassend bildet die Farbzuführeinrichtung 103 einen Farbzuführbaustein, der eine bis fünf einzelne Farbversorgungseinrichtungen 109 aufweisen kann. Dementsprechend flexibel ist die Farbzuführeinrichtung 103 an die jeweils verlangten Bedingungen anzupassen. So kann an den Lagerblock 160 die jeweils benötigte Anzahl von Farbversorgungseinrichtungen 109 mit entsprechenden Neben-Ventileinheiten 162 angebracht werden. Die nicht benötigten Farbanschlussleitungen 126 werden dann mit entsprechenden Verschlussstopfen verschlossen. Das gesamte Farbpumpensystem ist also modular aufgebaut.

Die Farbzuführung zur Schmelze erfolgt bei der Ausführungsform gem. Fig. 6 bis 8 analog den vorher beschriebenen Ausführungsformen kurz hinter der Rückstromsperre des Gehäusezylinders 1 der Plastifiziereinheit.

Die Haupt-Ventilanordnung 129 ist analog der Ventilanordnung 29 mit ihrem Verschlussende sehr nahe am Zylinderinnenmantel positioniert, sodass bei geschlossenem Ventil 129 praktisch keine Kunststoffmaterialreste in der Mündungsöffnung verbleiben. Die Haupt-Ventilnadel 130 ist im Fahrweg justierbar, sodass die Ventil-Spaltbreite variabel ist. Eine Wegposition zur Überwachung dient einer permanenten Kontrolle der Nadelstellung.

Auch die Farbpumpen 112 bei der Ausführungsform gem. Fig. 6 bis 8 sind einzeln sehr schnell und einfach mit Hilfe von Sicherheitsverschlüssen 169 am unteren Ende des Pumpenausgangs austauschbar. Die weiteren konstruktiven Einzelheiten, wie die Weichheit des Stahlwerkstoffes des Adaptereinsatzes 106, die Wärmedämmung mit Hilfe der Isolierplatte 128, die konusförmigen Dichtflächen der einzelnen Ventile und die externen, gesonderten Farbbehälter 116 mit eigenen Farbpumpen 112 sind bei dieser Ausführungsform mit den oben geschilderten Vorteilen ebenfalls umgesetzt.

## Patentansprüche

1. Plastifiziereinheit für eine Spritzgießmaschine, einen Extruder oder dergleichen, umfassend
- einen Gehäusezylinder (1),
- mindestens eine darin drehbar angetriebene Plastifizierschnecke (2),
- eine Flüssigkeitszuführeinrichtung (3) vor dem austrittsseitigen Ende (4) des Gehäusezylinders (1) zum Einbringen einer oder mehrerer Flüssigkeiten, insbesondere von Farbflüssigkeiten, in ein in der Plastifiziereinheit zu plastifizierendes Kunststoffmaterial,
- mindestens einen Flüssigkeitsanschluss-Adaptereinsatz (6, 6'), in dem ein Flüssigkeitszuführkanal (25) angeordnet ist,
- mindestens eine in der Zylinderwand (7) angelegte, über eine Zugriffsbohrung (31) in den Schneckenraum (5) mündende Aufnahme (8) für den Flüssigkeitsanschluss-Adaptereinsatz (6, 6'),
- eine auf dem Flüssigkeitsanschluss-Adaptereinsatz (6, 6') montierte Ventilanordnung (29), mittels derer der Flüssigkeitszuführkanal (25) im Bereich des Adaptereinsatzes (6, 6') verschließbar ist, und
- mindestens eine, vorzugsweise zwei oder mehr Flüssigkeitsversorgungseinrichtungen (9, 10), die jeweils eine Flüssigkeitspumpe (12, 13) mit Flüssigkeitsvorratsbehälter (16, 17) aufweisen und an einer jeweiligen Flüssigkeitsanschlussleitung (26, 26') der Ventilanordnung (29) angeschlossen sind,
wobei die vorzugsweise durch einen pneumatischen Antrieb (37) betätigbare Ventilanordnung (29) ein Nadelventil (30, 30') aufweist, dessen Ventilsitz (33) vorzugsweise auf Höhe der Zugriffsbohrung (31) in der Zylinderwand (7) angeordnet ist, **dadurch gekennzeichnet, dass** die Ventilanordnung (29) eine Zwei-Wege-Ventilanordnung (41) ist, über die zwei Flüssigkeitsanschlussleitungen (26, 26') wechselweise mit dem Flüssigkeitszufuhrkanal (25) verbindbar sind.

2. Plastifiziereinheit für eine Spritzgießmaschine, einen Extruder oder dergleichen, umfassend
- einen Gehäusezylinder (1),
- mindestens eine darin drehbar angetriebene Plastifizierschnecke (2),
- eine Flüssigkeitszuführeinrichtung (3) vor dem austrittsseitigen Ende (4) des Gehäusezylinders (1) zum Einbringen einer oder mehrerer Flüssigkeiten, insbesondere von Farbflüssigkeiten, in ein in der Plastifiziereinheit zu plastifizierendes Kunststoffmaterial,
- mindestens einen Flüssigkeitsanschluss-Adaptereinsatz (106), in dem ein Flüssigkeitszuführkanal (125) angeordnet ist,
- mindestens eine in der Zylinderwand (7) angelegte, über eine Zugriffsbohrung (31) in den Schneckenraum (5) mündende Aufnahme (8) für den Flüssigkeitsanschluss-Adaptereinsatz (106),
- eine auf dem Flüssigkeitsanschluss-Adaptereinsatz (106) montierte Ventilanordnung (129), mittels derer der Flüssigkeitszuführkanal (125) im Bereich des Adaptereinsatzes (106) verschließbar ist, und
- mindestens eine, vorzugsweise zwei oder mehr Flüssigkeitsversorgungseinrichtungen (109), die jeweils eine Flüssigkeitspumpe (112) mit Flüssigkeitsvorratsbehälter (116) aufweisen und an einer jeweiligen Flüssigkeitsanschlussleitung (126) der Ventilanordnung (129) angeschlossen sind,
wobei die vorzugsweise durch einen pneumatischen Antrieb (37) betätigbare Ventilanordnung (129) ein Nadelventil (130) aufweist, dessen Ventilsitz (133) vorzugsweise auf Höhe der Zugriffsbohrung (31) in der Zylinderwand (7) angeordnet ist, **dadurch gekennzeichnet, dass** eine Mehrfach-Ventileinheit vorgesehen ist, die die den Flüssigkeitszuführkanal (125) zum Schneckenraum (5) verschließende Haupt-Ventilanordnung (129) sowie mehrfache, vorzugsweise fünffache Neben-Ventileinheiten (162) in einzelnen, in den Flüssigkeitszuführkanal (125) mündenden Flüssigkeitsanschlussleitungen (126) umfasst.

3. Plastifiziereinheit nach Anspruch 1 oder 2, **dadurch gekennzeichnet, dass** an die Flüssigkeitsanschlussleitung (26, 26', 126) der Ventilanordnung (29, 129) mehrere Flüssigkeitsversorgungseinrichtungen (9, 10) über eine Verzweigung (24) angeschlossen sind.

4. Plastifiziereinheit nach Anspruch 1, 2 oder 3, **dadurch gekennzeichnet, dass** eine Spülmediumversorgungseinrichtung (11) mit einer Spülpumpe (18) und einem Spülmediumvorratsbehälter (20) an die Flüssigkeitsanschlussleitung (26, 26') anschließbar ist.

5. Plastifiziereinheit nach einem der vorgenannten Ansprüche, **dadurch gekennzeichnet, dass** der Durchmesser der Innenbohrung (53) des düsenförmigen Endes (32) zum Schneckenraum (5) je nach Viskosität des Flüssigkeitsmediums zwischen wenigen Zehntel und einigen Millimetern variiert.

6. Plastifiziereinheit nach einem der vorgenannten Ansprüche, **dadurch gekennzeichnet, dass** die Ventilnadel (30') einen hohlen, zum Schneckenraum (5) hin offenen Nadelschaft (51) aufweist, der über mindestens eine Schaftöffnung (52) wechselweise mit einer der Flüssigkeitsanschlussleitungen (26, 26') verbindbar ist, wobei gleichzeitig die andere Flüssigkeitsanschlussleitung (26, 26') verschlossen ist.

7. Plastifiziereinheit nach Anspruch 2, **dadurch gekennzeichnet, dass** die Neben-Ventileinheiten (162) einzeln durch Antriebe (137) unabhängig voneinander ansteuerbar sind.

8. Plastifiziereinheit nach Anspruch 2 oder 7, **dadurch gekennzeichnet, dass** die Flüssigkeitsanschlussleitungen (126) in einer zur Ventilachse (165) der Hauptventilanordnung (129) senkrechten Ebene in den Flüssigkeitszuführkanal (125) münden.

9. Plastifiziereinheit nach einem der Ansprüche 2, 7 oder 8, **dadurch gekennzeichnet, dass** die Flüssigkeitsanschlussleitungen (126) über einen Halbkreis vorzugsweise in Plastifizierrichtung nach hinten ausgerichtet, in regelmäßigen Winkelabständen (W) verteilt in den Flüssigkeitszuführkanal (125) münden.

10. Plastifiziereinheit nach einem der vorgenannten Ansprüche, **dadurch gekennzeichnet, dass** die Ventilanordnung (29, 129) in einer Wärmedämmeinlage (42) im Adaptereinsatz (6') oder auf einer Isolierplatte (28, 128) auf dem Adaptereinsatz (6, 106) angeordnet und/oder eine Temperiereinheit zum dauerhaften Wärmeentzug beim Adaptereinsatz (6; 106) vorgesehen ist.

11. Plastifiziereinheit nach einem der vorgenannten Ansprüche, **dadurch gekennzeichnet, dass** der Stahl-Werkstoff des Adaptereinsatzes (6, 6', 106) weicher als der des Gehäusezylinders (1) ist.

12. Plastifiziereinheit nach einem der vorgenannten Ansprüche, **dadurch gekennzeichnet, dass** zwischen Adaptereinsatz (6, 6', 106) und Aufnahme (8) des Gehäusezylinders (1) konusförmige Dichtflächen (39, 39', 139) vorgesehen sind, deren Konuswinkel zur Erzielung eines im Wesentlichen Linien-Dichtkontaktes geringfügig, vorzugsweise zwischen 0,5° und 5°, unterschiedlich sind.

13. Plastifiziereinheit nach einem der vorgenannten Ansprüche, **dadurch gekennzeichnet, dass** Drucksensoren (54, 54', 154, 154', 154") angeordnet sind
- in der Ventilanordnung (129) oder zwischen der Ventilanordnung (29) und der jeweiligen Flüssigkeitspumpe (12, 13) zur Erfassung des Fluiddruckes der zuzuführenden Flüssigkeit(en) und/oder
- an der Axialposition der Zugriffsbohrung (31) oder in deren Nähe an von der Zugriffsbohrung (31) abweichenden Peripherpositionen.

14. Plastifiziereinheit nach einem der vorgenannten Ansprüche, **dadurch gekennzeichnet, dass** Signalgeber (55) zur Erfassung des Öffnungs-und/oder Schließzustandes der Ventilanordnung (29) vorgesehen sind.

## Claims

1. Plasticiser unit for an injection moulding machine, an extruder or the like, comprising
- a housing cylinder (1),
- at least one plasticiser screw (2) arranged therein such as to be driven for rotation,
- a liquid supply unit (3) in front of the outlet end (4) of the housing cylinder (1) to introduce one or a plurality of liquids, in particular liquid dyes, into a plastic material to be plasticised in the plasticiser unit,
- at least one liquid connection adapter insert (6, 6') in which a liquid supply channel (25) is arranged,
- at least one receptacle (8) for the liquid connection adapter insert (6, 6'), the receptacle (8) being formed in the cylinder wall (7) such as to lead into the screw chamber (5) via an access bore (31),
- a valve arrangement (29) mounted on the liquid connection adapter insert (6, 6') by means of which the liquid supply channel (25) is sealable in the region of the adapter insert (6, 6'), and
- at least one, preferably two or more liquid supply units (9, 10) which are each provided with a liquid pump (12, 13) comprising a liquid storage container (16, 17) and are connected to a respective liquid connection line (26, 26') of the valve arrangement (29),
wherein the valve arrangement (29), which is preferably actuable via a pneumatic drive (37), comprises a needle valve (30, 30') the valve seat (33) of which is preferably arranged on a level with the access bore (31) in the cylinder wall (7), **characterised in that** the valve arrangement (29) is a two-way valve arrangement (41) via which two liquid connection lines (26, 26') are alternately connectable to the liquid supply channel (25).

2. Plasticiser unit for an injection moulding machine, an extruder or the like, comprising
- a housing cylinder (1),
- at least one plasticiser screw (2) arranged therein such as to be driven for rotation,
- a liquid supply unit (3) in front of the outlet end (4) of the housing cylinder (1) to introduce one or a plurality of liquids, in particular liquid dyes, into a plastic material to be plasticised in the plasticiser unit,
- at least one liquid connection adapter insert (106) in which a liquid supply channel (125) is arranged,
- at least one receptacle (8) for the liquid connection adapter insert (106), the receptacle (8) being formed in the cylinder wall (7) such as to lead into the screw chamber (5) via an access bore (31),
- a valve arrangement (129) mounted on the liquid connection adapter insert (106) by means of which the liquid supply channel (125) is sealable in the region of the adapter insert (106), and
- at least one, preferably two or more liquid supply units (109) which are each provided with a liquid pump (112) comprising a liquid storage container (116) and are connected to a respective liquid connection line (126) of the valve arrangement (129),
wherein the valve arrangement (129), which is preferably actuable via a pneumatic drive (37), comprises a needle valve (130) the valve seat (133) of which is preferably arranged on a level with the access bore (31) in the cylinder wall (7), **characterised in that** a multiple valve unit is provided that comprises the main valve arrangement (129) sealing the liquid supply channel (125) towards the screw chamber (5) as well as multiple, preferably quintuple auxiliary valve units (126) in individual liquid connection lines (126) leading into the liquid supply channel (125).

3. Plasticiser unit according to claim 1 or 2, **characterized in that** a plurality of liquid supply units (9, 10) are connected to the liquid supply line (26, 26'; 126) of the valve arrangement (29, 129) via a branch unit (24).

4. Plasticiser unit according to claim 1, 2 or 3, **characterised in that** a flushing medium supply unit (11) comprising a flushing pump (18) and a flushing medium storage container (20) is connectable to the liquid connection line (26, 26').

5. Plasticiser unit according to one of the preceding claims, **characterised in that** depending on the viscosity of the liquid medium, the diameter of the internal bore (53) of the nozzle-shaped end (32) towards the screw chamber (5) varies between a few tenths of and some millimetres.

6. Plasticiser unit according to one of the preceding claims, **characterised in that** the valve needle (30') comprises a hollow needle shaft (51) that is open towards the screw chamber (5) and is, via at least one shaft opening (52), alternately connectable to one of the liquid connection lines (26, 26'), wherein the other liquid connection line (26, 26') is closed at the same time.

7. Plasticiser unit according to claim 2, **characterised in that** the auxiliary valve units (162) are individually actuable independently from each other by means of drives (137).

8. Plasticiser unit according to claim 2 or 7, **characterised in that** the liquid connection lines (126) lead into the liquid supply channel (125) in a plane perpendicular to the valve axis (165) of the main valve arrangement (129).

9. Plasticiser unit according to one of claims 2, 7 or 8, **characterised in that** the liquid connection lines (126) lead into the liquid supply channel (125) in such a way that they are positioned in a semi-circle, preferably oriented rearwardly when seen in the plasticising direction, and distributed at regular angular distances (W).

10. Plasticiser unit according to one of the preceding claims, **characterised in that** the valve arrangement (29, 129) is arranged in a heat insulation layer (42) in the adapter insert (6') or on an insulation plate (28, 128) on the adapter insert (6, 106) and/or a temperature control unit is provided in the adapter insert (6; 106) for permanent heat removal.

11. Plasticiser unit according to one of the preceding claims, **characterised in that** the steel material of the adapter insert (6, 6', 106) is softer than that of the housing cylinder (1).

12. Plasticiser unit according to one of the preceding claims, **characterised in that** between adapter insert (6, 6', 106) and receptacle (8) of the housing cylinder (1), conical sealing faces (39, 39', 139) are provided the cone angles of which are slightly different, preferably between 0.5° and 5°, to obtain a substantial line sealing contact.

13. Plasticiser unit according to one of the preceding claims, **characterised in that** pressure sensors (54, 54', 154, 154', 154") are arranged
- in the valve arrangement (129) or between the valve arrangement (29) and the respective liquid pump (12, 13) to detect the fluid pressure of the liquid(s) to be supplied and/or
- at the axial position of the access bore (31) or in the proximity thereof at a peripheral position different from the access bore (31).

14. Plasticiser unit according to one of the preceding claims, **characterised in that** sensors (55) are provided to detect the opening and/or closing state of the valve arrangement (29).

## Revendications

1. Unité de plastification pour une machine de moulage par injection, une extrudeuse ou similaire, comprenant
- un cylindre formant boîtier (1),
- au moins une vis de plastification (2) entraînée en rotation dans ledit cylindre formant boîtier,
- un dispositif d'introduction de liquide (3) situé avant l'extrémité du côté évacuation (4) du cylindre formant boîtier (1) pour amener un ou plusieurs liquide(s), notamment des liquides colorés, dans une matière synthétique à plastifier dans l'unité de plastification,
- au moins un insert d'adaptateur formant raccordement fluidique (6, 6') dans lequel est agencé un canal d'introduction de liquide (25),
- au moins un logement (8) placé dans la paroi de cylindre (7), débouchant dans la chambre de la vis (5) via un alésage d'accès (31) pour l'insert d'adaptateur formant raccordement fluidique (6, 6'),
- un agencement de vannes (29) monté sur l'insert d'adaptateur formant raccordement fluidique (6, 6'), au moyen duquel agencement de vannes, le canal d'introduction de liquide (25) peut être obturé dans la zone de l'insert d'adaptateur (6, 6'), et
- au moins un, de préférence deux ou plusieurs dispositif(s) d'approvisionnement en liquide (9, 10), qui présente(nt) respectivement une pompe à liquide (12, 13) avec des réservoirs de liquide (16, 17) et sont raccordés à une conduite de raccordement de liquide (26, 26') respective de l'agencement de vannes (29),
dans laquelle l'agencement de vannes (29) actionnable de préférence via un actionneur pneumatique (37) présente un robinet à pointeau (30, 30') dont le siège de clapet (33) est agencé de préférence à hauteur de l'alésage d'accès (31) dans la paroi de cylindre (7), **caractérisée en ce que** l'agencement de vannes (29) est un agencement de vannes à deux voies (41) via lequel deux conduites de raccordement de liquide (26, 26') peuvent être alternativement reliées au canal d'introduction de liquide (25).

2. Unité de plastification pour une machine de moulage par injection, une extrudeuse ou similaire, comprenant
- un cylindre formant boîtier (1),
- au moins une vis de plastification (2) entraînée en rotation dans ledit cylindre formant boîtier,
- un dispositif d'introduction de liquide (3) situé avant l'extrémité du côté évacuation (4) du cylindre formant boîtier (1) pour amener un ou plusieurs liquide(s), notamment des liquides colorés, dans une matière synthétique à plastifier dans l'unité de plastification,
- au moins un insert d'adaptateur formant raccordement fluidique (106) dans lequel est agencé un canal d'introduction de liquide (125),
- au moins un logement (8) placé dans la paroi de cylindre (7), débouchant dans la chambre de la vis (5) via un alésage d'accès (31) pour l'insert d'adaptateur formant raccordement fluidique (106),
- un agencement de vannes (129) monté sur l'insert d'adaptateur formant raccordement fluidique (106), au moyen duquel agencement de vannes, le canal d'introduction de liquide (125) peut être obturé dans la zone de l'insert d'adaptateur (106), et
- au moins un, de préférence deux ou plusieurs dispositif(s) d'approvisionnement en liquide (109), qui présente(nt) respectivement une pompe à liquide (112) avec des réservoirs de liquide (116) et sont raccordés à une conduite de raccordement de liquide (126) respective de l'agencement de vannes (129),
dans laquelle l'agencement de vannes (129) actionnable de préférence via un actionneur pneumatique (37) présente un robinet à pointeau (130) dont le siège de clapet (133) est agencé de préférence à hauteur de l'alésage d'accès (31) dans la paroi de cylindre (7), **caractérisée en ce qu'**une unité de vannes multiples est prévue qui comprend l'agencement de vannes (129) principal obturant le canal d'introduction de liquide (125) vers la chambre de la vis (5), ainsi que des unités secondaires de vannes multiples, de préférence au nombre de cinq (162), individualisées, présentes dans les conduites de raccordement de liquide (126) débouchant dans le canal d'introduction de liquide (125),

3. Unité de plastification selon la revendication 1 ou 2, **caractérisé en ce qu'**à la conduite de raccordement de liquide (26, 26', 126) de l'agencement de vannes (29, 129) sont raccordés plusieurs dispositifs d'approvisionnement en liquide (9, 10) via un branchement (24).

4. Unité de plastification selon la revendication 1, 2 ou 3, **caractérisée en ce qu'**un dispositif d'approvisionnement en fluide de rinçage (11) doté d'une pompe de rinçage (18) et d'un réservoir de fluide de rinçage (20) peut être raccordé à la conduite de raccordement de liquide (26, 26').

5. Unité de plastification selon l'une quelconque des revendications précédentes, **caractérisée en ce que** le diamètre de l'alésage intérieur (53) de l'extrémité en forme de buse (32) allant vers la chambre de la vis (5) varie selon la viscosité du liquide de quelques rares dixièmes à quelques millimètres.

6. Unité de plastification selon l'une quelconque des revendications précédentes, **caractérisée en ce que** le pointeau du robinet (30') présente une tige d'aiguille (51) creuse et ouverte dans la direction de la chambre de la vis (5), qui peut être reliée via au moins un orifice de tige (52) en alternance avec une des conduites de raccordement de liquide (26, 26'), dans laquelle l'autre conduite de raccordement de liquide (26, 26') est simultanément verrouillée.

7. Unité de plastification selon la revendication 2, **caractérisée en ce que** les unités secondaires de vannes multiples (162) peuvent être commandées individuellement via un entraînement (137), indépendamment les unes des autres.

8. Unité de plastification selon la revendication 2 ou 7, **caractérisée en ce que** les conduites de raccordement de liquide (126) débouchent dans le canal d'introduction de liquide (125), sur un plan vertical à l'axe de la vanne (165) de l'agencement de vannes (129).

9. Unité de plastification selon l'une des revendications 2, 7 ou 8, **caractérisée en ce que** les conduites de raccordement de liquide (126) débouchent dans le canal d'introduction de liquide (125) réparties à des distances angulaires régulières (W), par un demi-cercle de préférence dirigé vers l'arrière dans une direction de plastification.

10. Unité de plastification selon l'une quelconque des revendications précédentes, **caractérisée en ce que** l'agencement de vannes (29, 129) est agencé dans une garniture d'isolement thermique (42) dans l'insert d'adaptateur (6') ou sur une plaque isolante (28, 128) sur l'insert d'adaptateur (6, 106), et/ou une unité de régulation de température pour une extraction thermique durable au niveau de l'insert d'adaptateur (6 ; 106) est prévue.

11. Unité de plastification selon l'une quelconque des revendications précédentes, **caractérisée en ce que** le matériau d'acier de l'insert d'adaptateur (6, 6', 106) est plus doux que celui du cylindre formant boîtier (1).

12. Unité de plastification selon l'une quelconque des revendications précédentes, **caractérisée en ce qu'**entre l'insert d'adaptateur (6, 6', 106) et le logement (8) du cylindre formant boîtier (1) sont prévues des surfaces d'étanchéité en forme de cône (39, 39', 139), dont les angles coniques sont légèrement différents, de préférence entre 0,5° et 5°, dans le but d'obtenir un contact d'étanchéité sensiblement linéaire.

13. Unité de plastification selon l'une quelconque des revendications précédentes, **caractérisée en ce que** des capteurs de pression (54, 54', 154, 154', 154") sont agencés
- dans l'agencement de vannes (129) ou entre l'agencement de vannes (29) et la pompe à liquide (12, 13) respective pour déterminer la pression du/des liquide(s) à introduire et/ou
- contre la position axiale de l'alésage d'accès (31) ou à proximité de celui-ci contre des positions périphériques s'écartant de l'alésage d'accès (31).

14. Unité de plastification selon l'une quelconque des revendications précédentes, **caractérisée en ce qu'**un générateur de signaux (55) est prévu pour déterminer un état ouvert et/ou fermé de l'agencement de vannes (29).
